(19)

Europäisches Patentamt
European Patent Office
Office européen des brevets

(11) EP 2 856 785 B1

(12) **EUROPEAN PATENT SPECIFICATION**

(45) Date of publication and mention
of the grant of the patent:
**03.04.2019 Bulletin 2019/14**

(21) Application number: **13797670.0**

(22) Date of filing: **15.05.2013**

(51) Int Cl.:
**H04L 12/14** *(2006.01)*      **H04M 15/00** *(2006.01)*

(86) International application number:
**PCT/CA2013/050373**

(87) International publication number:
**WO 2013/177694 (05.12.2013 Gazette 2013/49)**

(54) **PER FLOW AND PER SESSION METERING LIMIT APPLICATION**

ANWENDUNG ZUR BESTIMMUNG VON FLUSS- UND SITZUNGSABHÄNGIGEN
DOSIERUNGSGRENZEN

APPLICATION DE LIMITE DE COMPTAGE PAR FLUX ET PAR SESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2012 US 201213482109**

(43) Date of publication of application:
**08.04.2015 Bulletin 2015/15**

(73) Proprietor: **Alcatel Lucent
91620 Nozay (FR)**

(72) Inventors:
• **BRUNET, Richard A.
Ottawa, Ontario K2K 2E6 (CA)**
• **MO, Fan
Ottawa, Ontario K2K 2E6 (CA)**

(74) Representative: **Nokia EPO representatives
Nokia Technologies Oy
Karaportti 3
02610 Espoo (FI)**

(56) References cited:
**EP-A1- 2 493 221      EP-A2- 2 506 492
WO-A1-2012/014002      CN-A- 102 075 900
CN-A- 102 421 106      US-A1- 2006 050 711
US-A1- 2008 310 334      US-A1- 2011 275 344
US-A1- 2013 132 570**

• **UNKNOWN: "3rd Generation Partnership Project;
Technical Specification Group Core Network and
Terminals; Policy and Charging Control (PCC)
over Gx/Sd reference point (Release 11)", 3GPP
STANDARD; 3GPP TS 29.212, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. CT WG3, no. V11.4.0, 16
March 2012 (2012-03-16), pages 1-181,
XP050580284, [retrieved on 2012-03-16]**

**Description**

TECHNICAL FIELD

Various exemplary embodiments disclosed herein relate generally to flow and session metering in telecommunications networks.

BACKGROUND

As the demand increases for varying types of applications within mobile telecommunications networks, service providers must constantly upgrade their systems in order to reliably provide this expanded functionality. What was once a system designed simply for voice communication has grown into an all-purpose network access point, providing access to a myriad of applications including text messaging, multimedia streaming, and general Internet access. In order to support such applications, providers have built new networks on top of their existing voice networks, leading to a less-than-elegant solution. As seen in second and third generation networks, voice services must be carried over dedicated voice channels and directed toward a circuit-switched core, while other service communications are transmitted according to the Internet Protocol (IP) and directed toward a different, packet-switched core. This led to unique problems regarding application provision, metering and charging, and quality of experience (QoE) assurance.

In an effort to simplify the dual core approach of the second and third generations, the 3rd Generation Partnership Project (3GPP) has recommended a new network scheme it terms "Long Term Evolution" (LTE). In an LTE network, all communications are carried over an IP channel from user equipment (UE) to an all-IP core called the Evolved Packet Core (EPC). The EPC then provides gateway access to other networks while ensuring an acceptable QoE and charging a subscriber for their particular network activity.

The 3GPP generally describes the components of the EPC and their interactions with each other in a number of technical specifications, including the following components: Policy and Charging Rules Function (PCRF); Policy and Charging Enforcement Function (PCEF); and Bearer Binding and Event Reporting Function (BBERF) of the EPC. These specifications further provide some guidance as to how these elements interact in order to provide reliable data services and charge subscribers for use thereof. Similar examples of related prior art are CN102421106 and 3GPP TS 29.212; V11.4.0; 2012-03.

Within these communication networks, metering may be used to measure usage of the communication network by subscribers. Such usage may include, for example, voice, data, messaging, audio and video delivery, *etc.* Currently keys may be installed, for example, in a PCEF to measure usage. Currently the 3GPP standards do not allow the same key to be applied to a session and flow simultaneously.

SUMMARY

A brief summary of various exemplary embodiments is presented below. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in later sections. The present invention is defined by the appended independent claims. Dependent claims constitute embodiments of the invention. Any other subject-matter outside the scope of protection of the claims is to be regarded as examples not in accordance with the invention.

BRIEF DESCRIPTION OF THE DRAWINGS

In order to better understand various exemplary embodiments, reference is made to the accompanying drawings, wherein:

FIG. 1 illustrates an exemplary subscriber network for providing various data services;
FIG. 2 illustrates a flow diagram illustrating the dynamic use of a session key and a flow key in order to measure usage versus a metering limit; and
FIG. 3 illustrates a flow diagram illustrating the simultaneous use a session key and multiple flow keys in order to measure usage versus a metering.

To facilitate understanding, identical reference numerals have been used to designate elements having substantially the same or similar structure and/or substantially the same or similar function.

DETAILED DESCRIPTION

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various embodiments described herein are not necessarily mutually exclusive, as some embodiments can be combined with one or more other embodiments to form new embodiments.

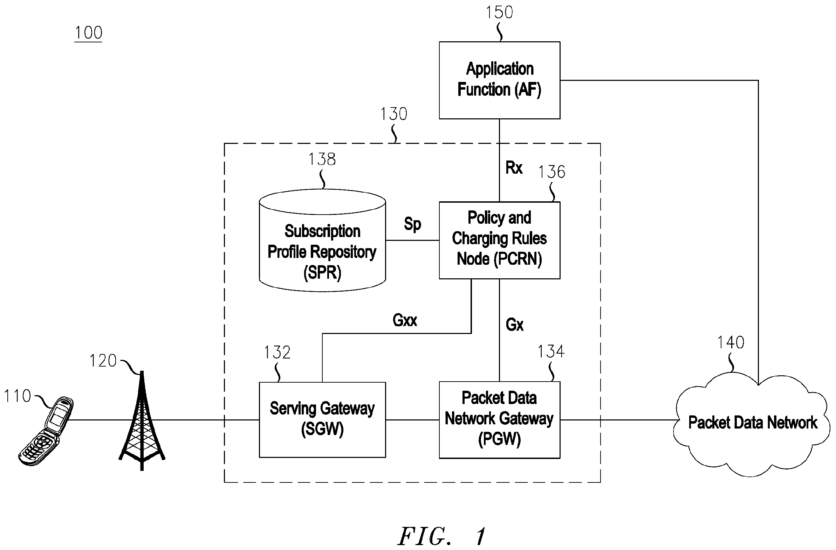

FIG. 1 illustrates an exemplary subscriber network 100 for providing various data services. Exemplary subscriber network 100 may be telecommunications network or other network for providing access to various services. Exemplary subscriber network 100 may include user equipment 110, base station 120, evolved packet core (EPC) 130, packet data network 140, and application function (AF) 150.

User equipment 110 may be a device that communicates with packet data network 140 for providing the end-user with a data service. Such data service may include, for example, voice communication, text messaging, multimedia streaming, and Internet access. More specifically, in various exemplary embodiments, user equipment 110 is a personal or laptop computer, wireless email device, cell phone, tablet, television set-top box, or any other device capable of communicating with other devices via EPC 130.

Base station 120 may be a device that enables communication between user equipment 110 and EPC 130. For example, base station 120 may be a base transceiver station such as an evolved nodeB (eNodeB) as defined by 3GPP standards. Thus, base station 120 may be a device that communicates with user equipment 110 via a first medium, such as radio waves, and communicates with EPC 130 via a second medium, such as Ethernet cable. Base station 120 may be in direct communication with EPC 130 or may communicate via a number of intermediate nodes (not shown). In various embodiments, multiple base stations (not shown) may be present to provide mobility to user equipment 110. Note that in various alternative embodiments, user equipment 110 may communicate directly with EPC 130. In such embodiments, base station 120 may not be present.

Evolved packet core (EPC) 130 may be a device or network of devices that provides user equipment 110 with gateway access to packet data network 140. EPC 130 may further charge a subscriber for use of provided data services and ensure that particular quality of experience (QoE) standards are met. Thus, EPC 130 may be implemented, at least in part, according to various 3GPP standards. Accordingly, EPC 130 may include a serving gateway (SGW) 132, a packet data network gateway (PGW) 134, a policy and charging rules node (PCRN) 136, and a subscription profile repository (SPR) 138.

Serving gateway (SGW) 132 may be a device that provides gateway access to the EPC 130. SGW 132 may be the first device within the EPC 130 that receives packets sent by user equipment 110. SGW 132 may forward such packets toward PGW 134. SGW 132 may perform a number of functions such as, for example, managing mobility of user equipment 110 between multiple base stations (not shown) and enforcing particular quality of service (QoS) characteristics for each flow being served. In various implementations, such as those implementing the Proxy Mobile IP standard, SGW 132 may include a Bearer Binding and Event Reporting Function (BBERF). In various exemplary embodiments, EPC 130 may include multiple SGWs (not shown) and each SGW may communicate with multiple base stations (not shown).

Packet data network gateway (PGW) 134 may be a device that provides gateway access to packet data network 140. PGW 134 may be the final device within the EPC 130 that receives packets sent by user equipment 110 toward packet data network 140 via SGW 132. PGW 134 may include a policy and charging enforcement function (PCEF) that enforces policy and charging control (PCC) rules for each service data flow (SDF). Therefore, PGW 134 may be a policy and charging enforcement node (PCEN). PGW 134 may include a number of additional features such as, for example, packet filtering, deep packet inspection, and subscriber charging support. PGW 134 may also be responsible for requesting resource allocation for unknown application services.

Policy and charging rules node (PCRN) 136 may be a device or group of devices that receives requests for application services, generates PCC rules, and provides PCC rules to the PGW 134 and/or other PCENs (not shown). PCRN 136 may be in communication with AF 150 via an Rx interface. As described in further detail below with respect to AF 150, PCRN 136 may receive an application request in the form of an Authentication and Authorization Request (AAR) 160 from AF 150. Upon receipt of AAR 160, PCRN 136 may generate at least one new PCC rule for fulfilling the application request 160.

PCRN 136 may also be in communication with SGW 132 and PGW 134 via a Gxx and a Gx interface, respectively. PCRN 136 may receive an application request in the form of a credit control request (CCR) (not shown) from SGW 132 or PGW 134. As with AAR 160, upon receipt of a CCR, PCRN may generate at least one new PCC rule for fulfilling the application request 170. In various embodiments, AAR 160 and the CCR may represent two independent application requests to be processed separately, while in other embodiments, AAR 160 and the CCR may carry information regarding a single application request and PCRN 136 may create at least one PCC rule based on the combination of AAR 160 and the CCR. In various embodiments, PCRN 136 may be capable of handling both single-message and paired-message application requests.

Upon creating a new PCC rule or upon request by the PGW 134, PCRN 136 may provide a PCC rule to PGW 134 via the Gx interface. In various embodiments, such as those implementing the PMIP standard for example, PCRN 136 may also generate QoS rules. Upon creating a new QoS rule or upon request by the SGW 132, PCRN 136 may provide a QoS rule to SGW 132 via the Gxx interface.

Subscription profile repository (SPR) 138 may be a device that stores information related to subscribers to the subscriber network 100. Thus, SPR 138 may include a machine-readable storage medium such as read-only memory (ROM), random-access memory (RAM), magnetic disk storage media, optical storage media, flash-memory devices, and/or similar storage media. SPR 138 may be a component of PCRN 136 or may constitute an independent node within EPC 130. Data stored by SPR 138 may include an identifier of each subscriber and indications of subscription information for each subscriber such as bandwidth limits, charging parameters, and subscriber priority.

Packet data network 140 may be any network for providing data communications between user equipment 110 and other devices connected to packet data network 140, such as AF 150. Packet data network 140 may further provide, for example, phone and/or Internet service to various user devices in communication with packet data network 140.

Application function (AF) 150 may be a device that provides a known application service to user equipment 110. Thus, AF 150 may be a server or other device that provides, for example, a video streaming or voice communication service to user equipment 110. AF 150 may further be in communication with the PCRN 136 of the EPC 130 via an Rx interface. When AF 150 is to begin providing known application service to user equipment 110, AF 150 may generate an application request message, such as an authentication and authorization request (AAR) 160 according to the Diameter protocol, to notify the PCRN 136 that resources should be allocated for the application service. This application request message may include information such as an identification of the subscriber using the application service, an IP address of the subscriber, an APN for an associated IP-CAN session, and/or an identification of the particular service data flows that must be established in order to provide the requested service. AF 150 may communicate such an application request to the PCRN 136 via the Rx interface.

Typically a user of the subscriber network 100 may have a metering limit that defines a limit on the amount of resources a subscriber may use in a specified time. For example, a subscriber may be entitled to 10 GB of data in a month. Other usage may be metered as well. In order to capture network usage by a subscriber, the PCRN 136 may install a key at a PCEN such as the PGW 134. The PGW 135 periodically sends usage information related to the key to the PCRN 136, so that the PCRN 136 can then compare the usage to the metering limit for the subscriber.

Key applied by the PGW 134 may be either a session key or a flow key. The session key will measure all usage associated with a user session such as an IP-CAN session. A flow key will measure the usage of a subscriber flow within the IP-CAN session.

A metering limit may be considered a resource or service of the subscriber. This resource is simply an amount of usage that may be consumed by the subscriber. There may be a desire to allow the same metering limit to be applied dynamically at either the session or flow level, or even at both levels. Accordingly, both a session key and a flow key may be associated with a metering limit. Currently, the 3GPP specifications do not allow the same key to be applied to a session and a flow simultaneously.

For example, an IP-CAN session may be established and a session key is installed to monitor the usage of the user. During the session the subscriber may roam onto another provider's network. The subscriber agreement may specify that data usage on a roaming network is charged at a different rate. For example, each unit of roaming data may count for two units of data on the home network. So if the roaming usage is associated only with a specific flow, then the PCRN 136 may dynamically install a key to monitor the usage of the flow associated with roaming. If the same key is used to monitor the flow and the session, then the session key may be uninstalled. A rating factor, in this example of 2, may then be applied to the usage reported in the flow, and then accumulated for comparison to the metering limit.

In another embodiment, both the session key and the flow key may both be installed and in effect simultaneously. In such a situation, the session key may measure the total usage of the subscriber associated with the IP-CAN session. The flow key may be installed to measure the usage of the subscriber associated with a specific flow. For example, the specific flow may be a video stream from a movie service. Further, such video streaming data may not, by agreement, be charged against the metering limit. Thus, any data usage measured by the flow key would be subtracted from the overall usage of the IP-CAN session to arrive at the subscriber's usage against the metering limit.

Further, this embodiment may be extended to include multiple flow keys and a session key that may be associated with a metering limit. For example, there may be a number of data flows that need to be metered differently from one another and/or from the overall session metering. The data usage associated with each key may have a rate factor applied before it is added to the total usage of the subscriber that is compared with the metering limit. Also, the usage measured by the session key, which inherently includes the usage associated with a data flow in the session, may be adjusted based upon the usage measured by the flow keys. Another reason, that the multiple flow keys may be used is because different flows have different quality of service requirements that require different rules for each flow. In this scenario, each flow may have an associated key.

For example, a user may have an established metering limit ML of 10 GB. When an IP-CAN session is established, first a session key SKI may be defined and installed to measure the total flow TF of the IP-CAN session. In addition, the subscriber has three different data flows DF1, DF2, and DF3 that count differently toward the subscriber's overall usage. The session key SF1 and flow keys associated with data flows DF1, DF2 and DF2 may all be associated with and counted against the metering limit ML. DF1 maybe a video streaming service whose data usage does not count against the metering limit ML. Depending on the implementation, DF1 may either just be subtracted from the total data usage TDU of the subscriber, or a rating factor RF1 of 0 may be used. DF2 may be a data service that is expensive relative to other data usage, so it may have a rating factor RF2 of 1.5. Finally, DF3 may be a data service that is less expensive relative to other data usage, so it may have a rating factor RF3 of 0.5. Based upon these parameters total data usage may be calculated as:

$$\mathrm{TDU} = \mathrm{TF} - (\mathrm{DF1} + \mathrm{DF2} + \mathrm{DF3}) + \mathrm{DF1*RF1} + \mathrm{DF2*RF2} + \mathrm{DF3*RF3}$$
$$= \mathrm{TF} + \mathrm{DF1*(RF1 - 1)} + \mathrm{DF2*(RF2 - 1)} + \mathrm{DF3*(RF3 - 1)}$$

The term (DF1 + DF2 + DF3) represents the total usage in the flows DF1, DF2, and DF3 that needs to be subtracted from the total flow TF. The term (*RF1 + DF2*RF2 + DF3*RF3) represents to total weighted usage for the flows DF1, DF2, and DF3 that needs to be added back to arrive at the total data usage TDU.

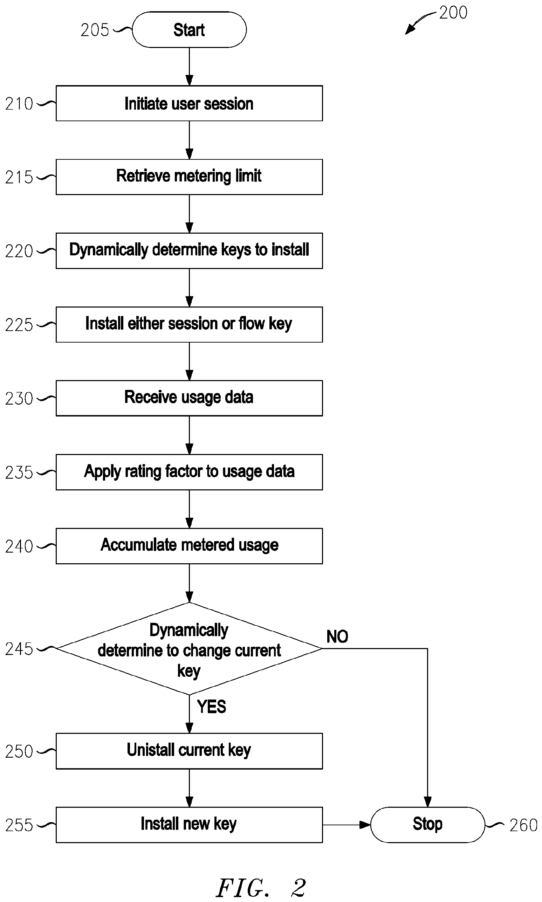

FIG. 2 illustrates a flow diagram illustrating the dynamic use of a session key and a flow key in order to measure usage versus a metering limit. The method 200 illustrated in FIG. 2 may be carried out by the PCRN 136. Also the method of illustrated in FIG. 2 may be implemented in hardware by software instruction executing on a processor.

The method 200 begins at 205. Next, a user session such as an IP-CAN session may be initiated 210. Once, the IP-CAN session is initiated, a metering limit for the subscriber may be retrieved 215. Other information related to the metering limit may also be included, such as the types of data flows that will have a flow key and associated rate factors if any are needed.

Next, the method 200 dynamically determines the key to install 220. In this embodiment, only one of a session key and a flow key may be installed at a given time. The key to be installed will be dynamically chosen based upon the current PCC rules in effect and any other operating parameters that may require the use of a session key or a flow key. The selected key may then be installed 225. The selected key may be either the session key or flow key.

Next, the method 200 receives usage data associated with the installed key 230. A rating factor may then be applied to the usage data 235. The rated usage data may then be accumulated to update the accumulated metered usage 240.

The method 200 next may dynamically determine to change the current key. This may be required because of some change in an operating parameter or characteristic of the system. If there is no dynamic change requested, then the method may end at 260. If there is a dynamic change requested, then the method 200 may uninstall the current key 250. Next, a new key may be installed 255. The method then may end at 260. For example, if the current key is a session key, then the new key to install may be a flow key. Alternatively, if the current key is a flow key, then the new key to install may be a session key.

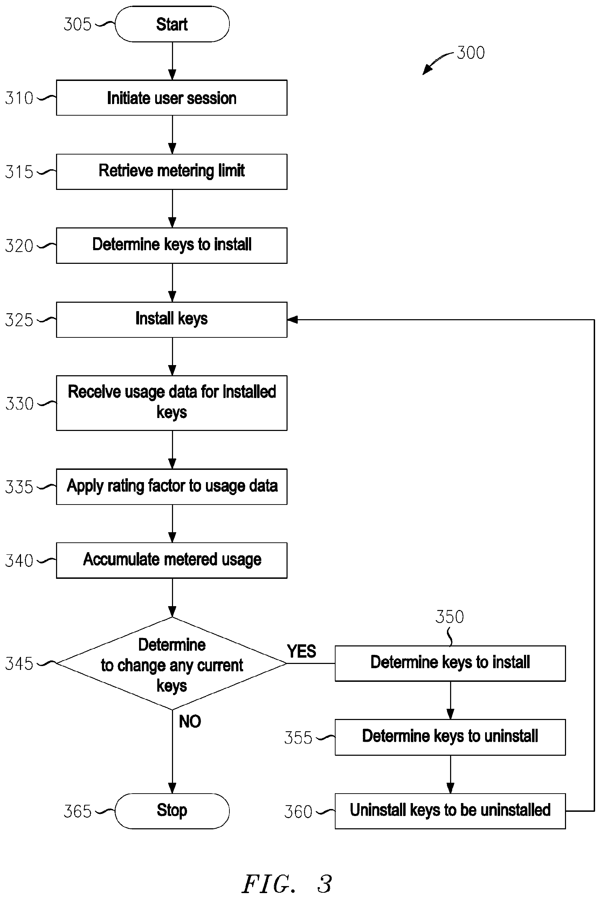

FIG. 3 illustrates a flow diagram illustrating the simultaneous use a session key and multiple flow keys in order to measure usage versus a metering limit. The method 300 illustrated in FIG. 3 may be carried out by the PCRN 136. Also the method of illustrated in FIG. 3 may be implemented in hardware by software instructions executing on a processor.

The method 300 begins at 305. Next, a user session such as an IP-CAN session may be initiated 310. Once, the IP-CAN session is initiated, a metering limit for the subscriber may be retrieved 315. Other information related to the metering limit may also be included, such as the types of data flows that will have a flow key and associated rate factors if any are needed.

Next, the method 300 determines the keys to install 320. In this embodiment, session key and any number of flow keys associated with the metering limit may be installed. The keys to be installed will be chosen based upon the current PCC rules in effect and any other operating parameters. The selected keys may then be installed 325.

Next, the method 300 receives usage data associated with the installed keys 330. Rating factors may then be applied to the usage data 335. The rated usage data may then be accumulated to update the accumulated metered usage 340.

The method 300 next may determine to change any current keys. This may be required because of some change in an operating parameter or characteristic of the system. If there is no change requested, then the method may end at 365. If there is a change requested, then the method 300 may determine the new keys to install 350. Further, the method 300 may determine which of the current keys to uninstall 355. Next, the method 300 may uninstall the keys to be uninstalled 360. Next, the method 300 may return to step 325 to install the new keys.

It should be apparent from the foregoing description that various exemplary embodiments of the invention may be implemented in hardware and/or firmware. Furthermore, various exemplary embodiments may be implemented as instructions stored on a machine-readable storage medium, which may be read and executed by at least one processor to perform the operations described in detail herein. A machine-readable storage medium may include any mechanism for storing information in a form readable by a machine, such as a personal or laptop computer, a server, or other computing device. Thus, a tangible and non-transitory machine-readable storage medium may include read-only memory (ROM), random-access memory (RAM), magnetic disk storage media, optical storage media, flash-memory devices, and similar storage media.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be effected while remaining within the scope of the invention. Accordingly, the foregoing disclosure, description, and figures are for illustrative purposes only and do not in any way limit the invention, which is defined only by the claims.

## Claims

1. A method performed by a policy and charging rules node (PCRN), the method comprising:

   receiving a metering limit associated with a user (215);
   defining a session key associated with the metering limit (220);
   defining a flow key associated with the metering limit (220);
   dynamically selecting the session key (225);
   commanding a policy and charging enforcement node to apply the dynamically selected session key to a session of the user, wherein the session key measures usage associated with the user session;
   dynamically selecting the flow key (245);
   commanding the policy and charging enforcement node to uninstall the session key(250); and
   commanding the policy and charging enforcement node to apply the dynamically selected flow key to a flow of the user (255).

2. The method of claim 1, further comprising receiving usage data associated with the applied dynamically selected flow key and accumulating the received usage data to determine metered usage.

3. The method of claim 2, further comprising applying a rating factor to the received usage data.

4. The method of claim 3, further comprising receiving rating factors associated with the user for the session key and the flow key.

5. The method of claim 1, wherein dynamically selecting the session key is based upon system operating parameters related to the user.

6. A method performed by a policy and charging rules node (PCRN), the method comprising:

   receiving a metering limit associated with a user;
   defining a session key associated with the metering limit;
   defining a flow key associated with the metering limit;
   dynamically selecting the flow key;
   commanding a policy and charging enforcement node to apply the dynamically selected flow key to a flow of the user;
   dynamically selecting the session key;

commanding the policy and charging enforcement node to uninstall the flow key and to apply the dynamically selected session key to a session of the user, wherein the session key measures usage associated with the user session.

7. The method of claim 6, further comprising receiving usage data associated with the applied dynamically selected session key and accumulating the received usage data to determine metered usage.

8. The method of claim 7, further comprising applying a rating factor to the received usage data and in particular comprising receiving rating factors associated with the user for the session key and the flow key.

9. The method of claim 6, wherein dynamically selecting the session key is based upon a policy and charging control (PCC) rule or dynamically selecting the session key is based upon system operating parameters related to the user.

10. A method performed by a policy and charging rules node (PCRN), the method comprising:

receiving a metering limit associated with a user (315);
defining a session key associated with the metering limit (320);
defining a flow key associated with the metering limit (320);
commanding a policy and charging enforcement node to simultaneously apply the session key to a session of the user and the flow key to a flow of the user, wherein the session key measures usage associated with the user session,
receiving an indication to change the installed keys (345);
determining new keys to install (350);
determining current keys to uninstall (355);
commanding a policy and charging enforcement node to uninstall the determined current keys; and
commanding a policy and charging enforcement node to install the new keys (325).

11. The method of claim 10, further wherein:

defining a flow key includes defining a plurality of flow keys associated to the metering limit; and
commanding a policy and charging enforcement node includes commanding a policy and charging enforcement node to simultaneously apply the session key to a session of the user and the plurality of flow keys to a plurality of flows of the user.

12. The method of claim 10, further comprising receiving usage data associated with the applied session and flow keys and accumulating the received usage data to determine metered usage.

13. The method of claim 10, further comprising applying a rating factor to the received usage data and in particular further comprising receiving rating factors associated with the user for the session key and the flow key.

14. The method of claim 10, wherein receiving an indication to change the installed keys is based upon a policy and charging control (PCC) rule or receiving an indication to change the installed keys is based upon system operating parameters related to the user.

**Patentansprüche**

1. Verfahren, das durch einen PCRN (Policy and Charging Rules Node) ausgeführt wird, wobei das Verfahren Folgendes umfasst:

Empfangen einer einem Benutzer zugeordneten Zählungsgrenze (215);
Definieren eines der Zählungsgrenze zugeordneten Sitzungsschlüssels (220);
Definieren eines der Zählungsgrenze zugeordneten Flussschlüssels (220);
dynamisches Auswählen des Sitzungsschlüssels (225);
einem PCEN (Policy and Charging Enforcement Node) befehlen, den dynamisch ausgewählten Sitzungsschlüssel auf eine Sitzung des Benutzers anzuwenden, wobei der Sitzungsschlüssel die der Benutzersitzung zugeordnete Benutzung misst;
dynamisches Auswählen des Flussschlüssels (245);

dem PCEN befehlen, den Sitzungsschlüssel zu deinstallieren (250); und
dem PCEN befehlen, den dynamisch ausgewählten Flussschlüssel auf einen Fluss des Benutzers anzuwenden (255) .

2. Verfahren nach Anspruch 1, das ferner Empfangen von dem angewendeten dynamisch ausgewählten Flussschlüssel zugeordneten Benutzungsdaten und Akkumulieren der empfangenen Benutzungsdaten zur Bestimmung gezählter Benutzung umfasst.

3. Verfahren nach Anspruch 2, das ferner Anwenden eines Einstufungsfaktors auf die empfangenen Benutzungsdaten umfasst.

4. Verfahren nach Anspruch 3, das ferner Empfangen von dem Benutzer zugeordneten Einstufungsfaktoren für den Sitzungsschlüssel und den Flussschlüssel umfasst.

5. Verfahren nach Anspruch 1, wobei dynamisches Auswählen des Sitzungsschlüssels auf den Benutzer betreffenden Systembetriebsparametern basiert.

6. Verfahren, das durch einen PCRN (Policy and Charging Rules Node) ausgeführt wird, wobei das Verfahren Folgendes umfasst:

Empfangen einer einem Benutzer zugeordneten Zählungsgrenze;
Definieren eines der Zählungsgrenze zugeordneten Sitzungsschlüssels;
Definieren eines der Zählungsgrenze zugeordneten Flussschlüssels;
dynamisches Auswählen des Flussschlüssels;
einem PCEN befehlen, den dynamisch ausgewählten Flussschlüssel auf einen Fluss des Benutzers anzuwenden;
dynamisches Auswählen des Sitzungsschlüssels;
dem PCEN befehlen, den Flussschlüssel zu deinstallieren und den dynamisch ausgewählten Sitzungsschlüssel auf eine Sitzung des Benutzers anzuwenden, wobei der Sitzungsschlüssel der Benutzersitzung zugeordnete Benutzung misst.

7. Verfahren nach Anspruch 6, das ferner Empfangen von dem angewendeten dynamisch ausgewählten Sitzungsschlüssel zugeordneten Benutzungsdaten und Akkumulieren der empfangenen Benutzungsdaten zur Bestimmung gezählter Benutzung umfasst.

8. Verfahren nach Anspruch 7, das ferner Anwenden eines Einstufungsfaktors auf die empfangenen Benutzungsdaten umfasst und insbesondere Empfangen von dem Benutzer zugeordneten Einstufungsfaktoren für den Sitzungsschlüssel und den Flussschlüssel umfasst.

9. Verfahren nach Anspruch 6, wobei dynamisches Auswählen des Sitzungsschlüssels auf einer PCC-Regel (Policy and Charging Control) basiert oder dynamisches Auswählen des Sitzungsschlüssels auf den Benutzer betreffenden Systembetriebsparametern basiert.

10. Verfahren, das durch einen PCRN (Policy and Charging Rules Node) ausgeführt wird, wobei das Verfahren Folgendes umfasst:

Empfangen einer einem Benutzer zugeordneten Zählungsgrenze (315);
Definieren eines der Zählungsgrenze zugeordneten Sitzungsschlüssels (320);
Definieren eines der Zählungsgrenze zugeordneten Flussschlüssels (320);
einem PCEN befehlen, gleichzeitig den Sitzungsschlüssel auf eine Sitzung des Benutzers und den Flussschlüssel auf einen Fluss des Benutzers anzuwenden, wobei der Sitzungsschlüssel die der Benutzersitzung zugeordnete Benutzung misst,
Empfangen einer Angabe, die installierten Schlüssel zu ändern (345);
Bestimmen von neuen zu installierenden Schlüsseln (350);
Bestimmen von aktuellen zu deinstallierenden Schlüsseln (355) ;
einem PCEN befehlen, die bestimmten aktuellen Schlüssel zu deinstallieren; und
dem PCEN befehlen, die neuen Schlüssel zu installieren (325) .

**11.** Verfahren nach Anspruch 10, wobei ferner Definieren eines Flussschlüssels Definieren mehrerer der Zählungsgrenze zugeordneter Flussschlüssel umfasst; und Befehligen eines PCRN umfasst, einem PCRN zu befehlen, gleichzeitig den Sitzungsschlüssel auf eine Sitzung des Benutzers und die mehreren Flussschlüssel auf mehrere Flüsse des Benutzers anzuwenden.

**12.** Verfahren nach Anspruch 10, das ferner Empfangen von den angewendeten Sitzungs-und Flussschlüsseln zugeordneten Benutzungsdaten und Akkumulieren der empfangenen Benutzungsdaten zur Bestimmung gezählter Benutzung umfasst.

**13.** Verfahren nach Anspruch 10, das ferner Anwenden eines Einstufungsfaktors auf die empfangenen Benutzungsdaten umfasst und ferner insbesondere Empfangen von dem Benutzer zugeordneten Einstufungsfaktoren für den Sitzungsschlüssel und den Flussschlüssel umfasst.

**14.** Verfahren nach Anspruch 10, wobei Empfangen einer Angabe, die installierten Schlüssel zu ändern, auf einer PCC-Regel (Policy and Charging Control) basiert oder Empfangen einer Angabe, die installierten Schlüssel zu ändern, auf den Benutzer betreffenden Systembetriebsparametern basiert.

## Revendications

**1.** Procédé mis en oeuvre par un noeud de règles de politique et de facturation (PCRN - policy and charging rules node), le procédé comprenant :

> la réception d'une limite de mesure associée à un utilisateur (215) ;
> la définition d'une clé de session associée à la limite de mesure (220) ;
> la définition d'une clé de flux associée à la limite de mesure (220) ;
> la sélection dynamique de la clé de session (225) ;
> la commande d'un noeud d'application de politique et de facturation pour appliquer la clé de session sélectionnée dynamiquement à une session de l'utilisateur, dans lequel la clé de session mesure l'utilisation associée à la session de l'utilisateur ;
> la sélection dynamique de la clé de flux (245) ;
> la commande du noeud d'application de politique et de facturation pour désinstaller la clé de session (250) ; et
> la commande du noeud d'application de politique et de facturation pour appliquer la clé de flux sélectionnée dynamiquement à un flux de l'utilisateur (255).

**2.** Procédé selon la revendication 1, comprenant en outre la réception de données d'utilisation associées à la clé de flux sélectionnée dynamiquement appliquée et l'accumulation des données d'utilisation reçues pour déterminer une utilisation mesurée.

**3.** Procédé selon la revendication 2, comprenant en outre l'application d'un facteur de tarification aux données d'utilisation reçues.

**4.** Procédé selon la revendication 3, comprenant en outre la réception de facteurs de tarification associés à l'utilisateur pour la clé de session et la clé de flux.

**5.** Procédé selon la revendication 1, dans lequel la sélection dynamique de la clé de session est basée sur des paramètres de fonctionnement du système liés à l'utilisateur.

**6.** Procédé mis en oeuvre par un noeud de règles de politique et de facturation (PCRN), le procédé comprenant :

> la réception d'une limite de mesure associée à un utilisateur ;
> la définition d'une clé de session associée à la limite de mesure ;
> la définition d'une clé de flux associée à la limite de mesure ;
> la sélection dynamique de la clé de flux ;
> la commande d'un noeud d'application de politique et de facturation pour appliquer la clé de flux sélectionnée dynamiquement à un flux de l'utilisateur ;
> la sélection dynamique de la clé de session ;
> la commande du noeud d'application de politique et de facturation pour désinstaller la clé de flux et pour appliquer la clé de session sélectionnée dynamiquement à une session de l'utilisateur, dans lequel la clé de session mesure l'utilisation associée à la session de l'utilisateur.

7. Procédé selon la revendication 6, comprenant en outre la réception de données d'utilisation associées à la clé de session sélectionnée dynamiquement appliquée et l'accumulation des données d'utilisation reçues pour déterminer une utilisation mesurée.

8. Procédé selon la revendication 7, comprenant en outre l'application d'un facteur de tarification aux données d'utilisation reçues et comprenant en particulier la réception de facteurs de tarification associés à l'utilisateur pour la clé de session et la clé de flux.

9. Procédé selon la revendication 6, dans lequel la sélection dynamique de la clé de session est basée sur une règle de contrôle de politique et de facturation (PCC - policy and charging control) ou bien la sélection dynamique de la clé de session est basée sur des paramètres de fonctionnement du système liés à l'utilisateur.

10. Procédé mis en oeuvre par un noeud de règles de politique et de facturation (PCRN), le procédé comprenant :

la réception d'une limite de mesure associée à un utilisateur (315) ;
la définition d'une clé de session associée à la limite de mesure (320) ;
la définition d'une clé de flux associée à la limite de mesure (320) ;
la commande d'un noeud d'application de politique et de facturation pour appliquer simultanément la clé de session à une session de l'utilisateur et la clé de flux à un flux de l'utilisateur, dans lequel la clé de session mesure l'utilisation associée à la session de l'utilisateur,
la réception d'une indication de changement des clés installées (345) ;
la détermination de nouvelles clés à installer (350) ;
la détermination des clés actuelles à désinstaller (355) ;
la commande d'un noeud d'application de politique et de facturation pour désinstaller les clés actuelles déterminées ;
et
la commande d'un noeud d'application de politique et de facturation pour installer les nouvelles clés (325).

11. Procédé selon la revendication 10, dans lequel, en outre :

la définition d'une clé de flux comprend la définition d'une pluralité de clés de flux associées à la limite de mesure ; et
la commande d'un noeud d'application de politique et de facturation comprend la commande d'un noeud d'application de politique et de facturation pour appliquer simultanément la clé de session à une session de l'utilisateur et la pluralité de clés de flux à la pluralité de flux de l'utilisateur.

12. Procédé selon la revendication 10, comprenant en outre la réception de données d'utilisation associées aux clés de session et de flux appliquées et l'accumulation des données d'utilisation reçues pour déterminer une utilisation mesurée.

13. Procédé selon la revendication 10, comprenant en outre l'application d'un facteur de tarification aux données d'utilisation reçues et comprenant en outre en particulier la réception de facteurs de tarification associés à l'utilisateur pour la clé de session et la clé de flux.

14. Procédé selon la revendication 10, dans lequel la réception d'une indication de changement des clés installées est basée sur une règle de contrôle de politique et de facturation (PCC) ou bien la réception d'une indication de changement des clés installées est basée sur des paramètres de fonctionnement du système liés à l'utilisateur.

FIG. 1

200

205 — Start

210 — Initiate user session

215 — Retrieve metering limit

220 — Dynamically determine keys to install

225 — Install either session or flow key

230 — Receive usage data

235 — Apply rating factor to usage data

240 — Accumulate metered usage

245 — Dynamically determine to change current key

NO

YES

250 — Unistall current key

255 — Install new key → Stop — 260

*FIG. 2*

305 Start

300

310 Initiate user session

315 Retrieve metering limit

320 Determine keys to install

325 Install keys

330 Receive usage data for installed keys

335 Apply rating factor to usage data

340 Accumulate metered usage

345 Determine to change any current keys

YES

350 Determine keys to install

355 Determine keys to uninstall

360 Uninstall keys to be uninstalled

NO

365 Stop

*FIG. 3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 102421106

### Non-patent literature cited in the description

- *3GPP TS 29.212; V11.4.0,* March 2012